# EUROPEAN PATENT APPLICATION

(11) **EP 4 011 686 A1**
(43) Date of publication of application: **15.06.2022**
(21) Application number: 20864206.6
(22) Date of filing: 03.09.2020
(51) Int. Cl.: B60L 53/66

(54) **ELECTRONIC DEVICE, SERVER, WIRELESS COMMUNICATION METHOD, AND COMPUTER-READABLE STORAGE MEDIUM**

(30) Priority: 10.09.2019 CN 201910853100
(71) Applicant: Sony Group Corporation, Tokyo 108-0075 (JP)
(72) Inventor: CUI, Tao, Beijing 100028 (CN)
(74) Representative: D Young & Co LLP
(86) International application number: PCT/CN2020/113221
(87) International publication number: WO 2021/047439

(57) **Abstract**

The present disclosure relates to an electronic device, a server, a wireless communication method, and a computer-readable storage medium. The electronic device according to the present disclosure is used in a vehicle, includes a processing circuit, and is configured to: receive fleet pre-established information from the server, wherein, the fleet pre-established information indicates that a plurality of vehicles including the electronic device drive to the charging device in the form of the fleet, and the fleet pre-established information includes information of the leader vehicle of the fleet; receive charging path planning information from the leader vehicle; and join the fleet to drive to the charging device according to the charging path planning information. Using the electronic device, server, wireless communication method, and computer-readable storage medium according to the present disclosure, it can reasonably determine the charging manner and plan the charging route for the electric vehicle.

## Description

This application claims the priority to Chinese Patent Application No. 201910853100.1 titled "ELECTRONIC DEVICE, SERVER, WIRELESS COMMUNICATION METHOD, AND COMPUTER-READABLE STORAGE MEDIUM", filed on September 10, 2019 with the China National Intellectual Property Administration, which is incorporated herein by reference in its entirety.

### FIELD

Embodiments of the present disclosure generally relate to the technical field of wireless communications, in particular to an electronic device, a server, a wireless communication method and a computer-readable storage medium. More particularly, the present disclosure relates to an electronic device for a vehicle, a server, a wireless communication method performed by an electronic device for a vehicle, a wireless communication method performed by a server, and a computer-readable storage medium.

### BACKGROUND

An electric vehicle is an automobile that is propelled by an electric motor, using power from an on-board power supply, meeting the requirements of road traffic and safety regulations. Compared with a conventional vehicle, the electric vehicle has less impact on the environment, and thus the electric vehicle has a good prospect. In a case where power of the electric vehicle is insufficient, a server is required to determine a charging manner and plan a charging route for the electric vehicle. In this process, power of a battery of the electric vehicle, positions of a point of departure and a destination, information of a charging apparatus, traffic information and the like are required to be considered.

Therefore, it is required to provide a technical solution to reasonably determine a charging manner and plan a charging route for an electric vehicle.

### SUMMARY

This section provides a general summary of the present disclosure, rather than a comprehensive disclosure of full scope or all features of the present disclosure.

An electronic device, a server, a wireless communication method and a computer-readable storage medium are provided according to the present disclosure, to reasonably determine a charging manner and plan a charging route for an electric vehicle.

An electronic device for a vehicle is provided according to an aspect of the present disclosure. The electronic device includes processing circuitry. The processing circuitry is configured to: receive motorcade pre-establishment information from a server, where the motorcade pre-establishment information represents that multiple vehicles including the electronic device travel to a charging apparatus in a form of a motorcade and the motorcade pre-establishment information includes information on a head vehicle of the motorcade; receive charging path planning information from the head vehicle; and join in the motorcade according to the charging path planning information to travel to the charging apparatus.

A server is provided according to another aspect of the present disclosure. The server includes processing circuitry. The processing circuitry is configured to: determine a motorcade for a to-be-charged vehicle, so that multiple vehicles including the to-be-charged vehicle travel to a charging apparatus in a form of a motorcade, and a head vehicle in the motorcade is a vehicle that obtains charging path planning information from the server; and send motorcade pre-establishment information to the to-be-charged vehicle, where the motorcade pre-establishment information includes information of the head vehicle.

An electronic device for a vehicle is provided according to another aspect of the present disclosure. The electronic device includes processing circuitry. The processing circuitry is configured to: send, to vehicles around the electronic device, charging request information that requests the vehicles around the electronic device to charge the electronic device; determine a vehicle among vehicles that agree to charge the electronic device as a charging vehicle; receive charging path planning information from the charging vehicle; and travel to the charging vehicle according to the charging path planning information.

A wireless communication method performed by an electronic device for a vehicle is provided according to another aspect of the present disclosure. The wireless communication method includes receiving motorcade pre-establishment information from a server, where the motorcade pre-establishment information representing multiple vehicles including the electronic device travel to a charging apparatus in a form of a motorcade, and the motorcade pre-establishment information includes information on a head vehicle in the motorcade; receiving charging path planning information from the head vehicle; and joining in the motorcade according to the charging path planning information, to travel to the charging apparatus.

A wireless communication method performed by a server is provided according to another aspect of the present disclosure. The wireless communication method includes determining a motorcade for a to-be-charged vehicle, so that multiple vehicles including the to-be-charged vehicle travel to a charging apparatus in a form of a motorcade, and a head vehicle in the motorcade is a vehicle that obtains charging path planning information from the server; and sending motorcade pre-establishment information to the to-be-charged vehicle, where the motorcade pre-establishment information includes information of the head vehicle.

A wireless communication method performed by an electronic device for a vehicle is provided according to another aspect of the present disclosure. The wireless communication method includes sending, to vehicles around the electronic device, charging request information that requests the vehicles around the electronic device to charge the electronic device; determining a vehicle among vehicles that agree to charge the electronic device as a charging vehicle; receiving charging path planning information from the charging vehicle; and travelling to the charging vehicle according to the charging path planning information.

A computer-readable storage medium is provided according to another aspect of the present disclosure. The computer-readable storage medium include executable computer instructions that, when executed by a computer, cause the computer to perform the wireless communication method according to the present disclosure.

With the electronic device, the server, the wireless communication method and the computer-readable storage medium according to present disclosure, a to-be-charged vehicle may travel to a charging apparatus in a form of a motorcade for charging, and a head vehicle in the motorcade sends path planning information to the to-be-charged vehicle, so that the to-be-charged vehicle can join in the motorcade. In this way, it is unnecessarily for multiple to-be-charged vehicles to respectively obtain the path planning information and respectively travel to the charging apparatus, the multiple to-be-charged vehicles may travel to the charging apparatus in the form of a motorcade for charging, thereby avoiding repeated sending of the path planning information and waste of resources. Further, with the electronic device, the server, the wireless communication method and the computer-readable storage medium according to present disclosure, the to-be-charged vehicle may be charged by vehicles around the to-be-charged vehicle, so as to achieve fast-charging.

Further applicability areas are become apparent from the description provided herein. The description and specific examples in the summary are only schematic and are not intended to limit the scope of the present disclosure.

### BRIEF DESCRIPTION OF THE DRAWINGS

Drawings described herein are only schematic for described embodiments, rather than all embodiments, and are not intended to limit the scope of the present disclosure. In the drawing:
Figure 1 is a block diagram showing a configuration example of an electronic device for a vehicle according to an embodiment of the present disclosure;
Figure 2 is a signaling flow chart showing a to-be-charged vehicle travelling to a charging apparatus in a form of a motorcade according to an embodiment of the present disclosure;
Figure 3 is a signaling flow chart showing a to-be-charged vehicle travelling to a charging apparatus independently according to an embodiment of the present disclosure;
Figure 4 is a signaling flow chart showing that a server provides options including travelling to a charging apparatus in a form of a motorcade or travelling to a charging apparatus independently for a to-be-charged vehicle according to an embodiment of the present disclosure;
Figure 5 is a block diagram showing a configuration example of a server according to an embodiment of the present disclosure;
Figure 6 is a block diagram showing a configuration example of an electronic device for a vehicle according to another embodiment of the present disclosure;
Figure 7 is a signaling flow chart showing that a charging vehicle charges a to-be-charged vehicle according to an embodiment of the present disclosure;
Figure 8 is a signaling flow chart showing a charging vehicle charging to a to-be-charged vehicle according to an embodiment of the present disclosure;
Figure 9 is a block diagram showing a configuration example of a server according to an embodiment of the present disclosure;
Figure 10 is a signaling flow chart showing that a server determines a charging manner according to an embodiment of the present disclosure;
Figure 11 is a flow chart of a wireless communication method according to an embodiment of the present disclosure;
Figure 12 is a flow chart of a wireless communication method according to an embodiment of the present disclosure;
Figure 13 is a flow chart of a wireless communication method according to an embodiment of the present disclosure;
Figure 14 is a flow chart of a wireless communication method according to an embodiment of the present disclosure;
Figure 15 is a flow chart of a wireless communication method according to an embodiment of the present disclosure; and
Figure 16 is a block diagram showing an example of a server according to the present disclosure.

While the present disclosure is susceptible to various modifications and alternative forms, specific embodiments thereof have been shown by way of example in the drawings and are herein described in detail. It should be understood that the description for the specific embodiments herein is not intended to limit the present disclosure to the disclosed specific forms, but on the contrary, the present disclosure is intended to encompass all modifications, equivalents and alternatives that fall within the spirit and scope of the present disclosure. It should be noted that, reference numerals indicate parts corresponding to the reference numerals throughout the drawings.

### DETAILED DESCRIPTION OF EMBODIMENTS

Examples of the present disclosure are described more fully with reference to the drawings. The following description is merely exemplary rather than being intended to limit the present disclosure and applications or uses of the present disclosure.

Exemplary embodiments are provided to make the present disclosure be exhaustive and fully convey the scope of the present disclosure to those skilled in the art. Various specific details such as specific parts, devices and methods are set forth to provide thorough understanding for the embodiments of the present disclosure. It is apparent to those skilled in the art that the exemplary embodiments may be embodied in many different forms without the specific details, and the specific details are not interpreted as a limit for the scope of the present disclosure. In some exemplary embodiments, well-known processes, well-known structures and well-known technology are not described in detail.

Hereinafter, the present disclosure is described according to the following sequence.
1. Configuration Examples of Electronic Device according to First Embodiment
2. Configuration Examples of Server according to First Embodiment
3. Configuration Examples of Electronic Device according to Second Embodiment
4. Configuration Examples of Server according to Second Embodiment
5. Method Embodiments
6. Application Examples

### [1. Configuration Examples of Electronic Device according to First Embodiment]

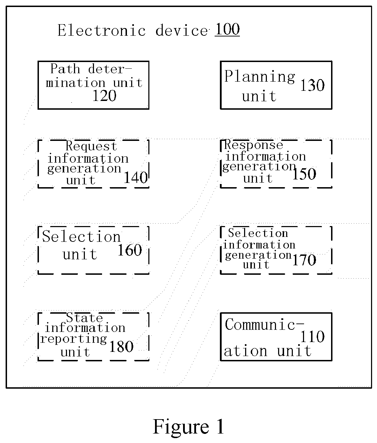

Figure 1 is a block diagram showing a configuration example of an electronic device 100 for a vehicle according to an embodiment of the present disclosure. Here, the electronic device 100 may be an electronic device integrated in the vehicle or an on-board electronic device separated from the vehicle. In addition, the vehicle may be an electric vehicle.

As shown in Figure 1, the electronic device 100 may include a communication unit 110, a path determination unit 120, and a planning unit 130.

Here, each unit of the electronic device 100 may be included in processing circuitry. It should be noted that, the electronic device 100 may include one processing circuitry or multiple processing circuitries. Furthermore, the processing circuitry may include various discrete functional units to perform various different functions and/or operations. It should be noted that these functional units may be physical entities or logical entities, and units with different names may be implemented by a same physical entity.

According to an embodiment of the present disclosure, the electronic device 100 may receive motorcade pre-establishment information from a server through the communication unit 110. Here, the motorcade pre-establishment information may represent that multiple vehicles including the electronic device 100 travel to a charging apparatus in a form of a motorcade, and the motorcade pre-establishment information includes information on a head vehicle in the motorcade.

Here, the server may be a device that provides services for the electronic device 100. For example, the server may be arranged in a near end device such as a roadside device or in a remote device such as a cloud. Further, the server may further be arranged in a base station device. The electronic device 100 may communicate with the server in a short-range communication manner or a cellular communication manner. In addition, the charging apparatus may be, for example, a charging pile.

According to an embodiment of the present disclosure, the electronic device 100 may receive charging path planning information from the head vehicle through the communication unit 110. Further, the path determination unit 120 may determine information related to a charging path according to the received charging path planning information.

According to an embodiment of the present disclosure, the planning unit 130 may join in the motorcade according to the charging path planning information, to travel to the charging apparatus. Specifically, the planning unit 130 may plan a path according to the information related to the charging path, so as to join in the motorcade and travel to the charging apparatus.

As described above, the electronic device 100 according to the present disclosure may travel to the charging apparatus in the form of a motorcade for charging, and the head vehicle in the motorcade sends path planning information to the electronic device 100, so that the electronic device 100 can join in the motorcade. In this way, it is unnecessarily for multiple to-be-charged vehicles to respectively obtain the path planning information and respectively travel to the charging apparatus, the multiple to-be-charged vehicles may travel to the charging apparatus in the form of a motorcade for charging, thereby avoiding repeated sending of the path planning information and waste of resources.

According to an embodiment of the present disclosure, as shown in Figure 1, the electronic device 100 may further include a request information generation unit 140. The request information generation unit 140 is configured to generate charging request information. Further, the electronic device 100 may send the charging request information to the server through the communication unit 110.

According to an embodiment of the present disclosure, the electronic device 100 may generate charging request information according to battery information of the electronic device 100. For example, when power of the battery is lower than a predetermined threshold, it is determined that the electronic device 100 is required to be charged, so that the electronic device 100 generates the charging request information. In this case, the server generates and sends motorcade pre-establishment information based on the charging request information from the electronic device 100.

According to an embodiment of the present disclosure, the server may further actively generate the motorcade pre-establishment information. For example, the server may determine that the electronic device 100 is required to be charged according to the battery information reported by the electronic device 100, so as to generate and send the motorcade pre-establishment information.

According to an embodiment of the present disclosure, the motorcade pre-establishment information may include, for example, identification information of the head vehicle. Here, the head vehicle may be a vehicle that obtains the charging path planning information from the server, and a charging apparatus to which the head vehicle travels is the same as a charging apparatus to which the electronic device 100 is about to travel. According to an embodiment of the present disclosure, the motorcade may only include the head vehicle and the electronic device 100. That is, in a case where the server determines that the electronic device 100 is required to be charged, the server determines that the electronic device 100 may form a motorcade with the head vehicle that obtains the charging path planning information. In addition, the motorcade may further include vehicles other than the head vehicle and the electronic device 100. That is, in the case where the server determines that the electronic device 100 is required to be charged, the head vehicle has formed a motorcade with other vehicles, and the server determines that the electronic device 100 may join in the motorcade.

According to an embodiment of the present disclosure, as shown in Figure 1, the electronic device 100 may further include a response information generation unit 150. The response information generation unit 150 is configured to generate motorcade pre-establishment response information representing whether the electronic device 100 agrees to join in the motorcade to travel to the charging apparatus. That is, when the electronic device 100 receives the motorcade pre-establishment information, the electronic device 100 may determine whether to agree to join in the motorcade to travel to the charging apparatus, and generate the motorcade pre-establishment response information. For example, in a case where the electronic device 100 agrees to join in the motorcade to travel to the charging apparatus, the motorcade pre-establishment response information may include information indicating "agree". In a case where the electronic device 100 disagrees to join in the motorcade to travel to the charging apparatus, the motorcade pre-establishment response information may include information indicating "disagree".

According to an embodiment of the present disclosure, in a case where both the electronic device 100 and the head vehicle agree that the electronic device 100 joins in the motorcade and travels to the charging apparatus, the electronic device 100 may further receive motorcade establishment information from the server, so that the electronic device 100 may join in the motorcade.|

According to an embodiment of the present disclosure, after determining the motorcade being established, the electronic device 100 may receive the charging path planning information from the head vehicle through the communication unit 110. Here, the charging path planning information may include positional information of the head vehicle and positional information of the charging apparatus. Alternatively, the charging path planning information may further include road condition information on a charging path. Therefore, the path determination unit 120 may determine a position of the head vehicle, a position of the charging apparatus and/or the road condition on the charging path according to the charging path planning information. Next, the planning unit 130 may plan the charging path according to the position of the head vehicle and/or the road condition on the charging path, that is, determine a travelling distance, a travelling direction and the like, so that the electronic device 100 joins in the motorcade and travels to the charging apparatus. Here, the charging path may include a path from the electronic device 100 to the head vehicle. That is, the electronic device 100 first travels to the head vehicle, and then joins in the motorcade to travel to the charging apparatus.

According to an embodiment of the present disclosure, after determining the motorcade being established, the electronic device 100 may further send vehicle state information of the electronic device 100 to the head vehicle through the communication unit 110, and the vehicle state information may include the battery information.

According to an embodiment of the present disclosure, the electronic device 100 may communicate with a head vehicle in a short-range communication manner. For example, the electronic device 100 may communicate with a head vehicle through a sidelink between vehicles.

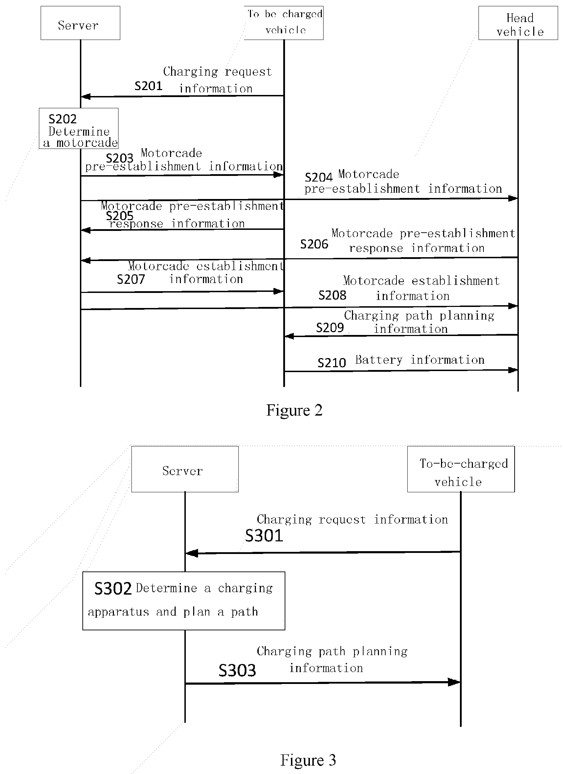

Figure 2 is a signaling flow chart showing a to-be-charged vehicle travelling to a charging apparatus in a form of a motorcade according to an embodiment of the present disclosure. In Figure 2, the to-be-charged vehicle may be implemented by the electronic device 100. As shown in Figure 2, in step S201, the to-be-charged vehicle sends charging request information to a server. According to the embodiment of the present disclosure, this step is unnecessary. Next, in step S202, the server determines a motorcade for the to-be-charged vehicle. A destination charging apparatus of the motorcade is the same as the charging apparatus of the to-be-charged vehicle. In addition, a head vehicle in the motorcade obtains path planning information from the server. Next, in step S203, the server sends motorcade pre-establishment information to the to-be-charged vehicle. The motorcade pre-establishment information may include identification information of the head vehicle. Next, in step S204, the server sends motorcade pre-establishment information to the head vehicle. The motorcade pre-establishment information may include identification information of the to-be-charged vehicle. Next, in step S205, the to-be-charged vehicle sends motorcade pre-establishment response information to the server, including information indicating that the electronic device 100 agrees or disagrees to join in the motorcade. Next, in step S206, the head vehicle sends motorcade pre-establishment response information to the server, including information indicating that the head vehicle agrees or disagrees that the to-be-charged vehicle joins in the motorcade. Here, it is assumed that both the to-be-charged vehicle and the head vehicle agree that the to-be-charged vehicle joins in the motorcade. In step S207, the server sends motorcade establishment information to the to-be-charged vehicle. In addition, in step S208, the server sends the motorcade establishment information to the head vehicle, so as to establish a motorcade. Next, in step S209, the head vehicle sends charging path planning information to the to-be-charged vehicle. In step S210, the to-be-charged vehicle sends battery information to the head vehicle. In this way, the to-be-charged vehicle joins in the motorcade where the head vehicle is located and travels to the charging apparatus.

As described above, according to the embodiment of the present disclosure, the server may determine a motorcade for a to-be-charged vehicle, so that the to-be-charged vehicle and other vehicles travel to a charging apparatus in a form of a motorcade.

According to an embodiment of the present disclosure, as shown in Figure 1, the electronic device 100 may further include a selection unit 160. The selection unit 160 is configured to select to travel to the charging apparatus in the form of a motorcade or to travel to the charging apparatus independently.

Further, as shown in Figure 1, the electronic device 100 may further include a selection information generation unit 170. The selection information generation unit 170 is configured to generate selection information representing a selection result of the selection unit 160. Further, the electronic device 100 may sent the selection information generated by the selection information generation unit 170 to the server through the communication unit 110.

As described above, according to an embodiment of the present disclosure, the electronic device 100 may select to travel to the charging apparatus in the form of a motorcade or to travel to the charging apparatus independently. That is, only when the electronic device 100 selects to travel to the charging apparatus in the form of a motorcade, the electronic device 100 receives the motorcade pre-establishment information from the server.

According to an embodiment of the present disclosure, the electronic device 100 may determine a charging manner according to requirements of the electronic device 100. For example, in a case where the electronic device 100 wants to arrive at the charging apparatus for charging as soon as possible, the electronic device 100 may select to travel to the charging apparatus independently. In a case where the electronic device 100 has sufficient time or wants to travel to the charging apparatus under leadership of the head vehicle, the electronic device 100 may select to travel to the charging apparatus in the form of a motorcade.

According to an embodiment of the present disclosure, in the case where the electronic device 100 selects to travel to the charging apparatus independently, the electronic device 100 may receive, from the server, charging path planning information for travelling to the charging apparatus. The charging path planning information herein may include, for example, positional information of the charging apparatus. Alternatively, the charging path planning information may further include road condition information on a charging path. The charging path herein may include a charging path from the electronic device 100 to the charging apparatus. Further, the path determination unit 120 may determine information related to the charging path, such as a position of the charging apparatus and a road condition on the charging path. Therefore, the planning unit 130 may plan the charging path, so that the electronic device 100 travels to the charging apparatus independently.

Figure 3 is a signaling flow chart showing a to-be-charged vehicle travelling to a charging apparatus independently according to an embodiment of the present disclosure. In Figure 3, the to-be-charged vehicle may be implemented by the electronic device 100. As shown in Figure 3, in step S301, the to-be-charged vehicle sends charging request information to a server. Alternatively, the server may actively determine that the to-be-charged vehicle is required to be charged, thereby omitting step S301. Next, in step S302, the server determines a charging apparatus for the to-be-charged vehicle and plans a charging path from the to-be-charged vehicle to the charging apparatus. Next, in step S303, the server sends charging path planning information to the to-be-charged vehicle. In this way, the to-be-charged vehicle may travel to the charging apparatus independently.

As described above, according to the embodiment of the present disclosure, the to-be-charged vehicle may travel to the charging apparatus independently. In this way, the to-be-charged vehicle can quickly arrive at the charging apparatus and avoid queuing.

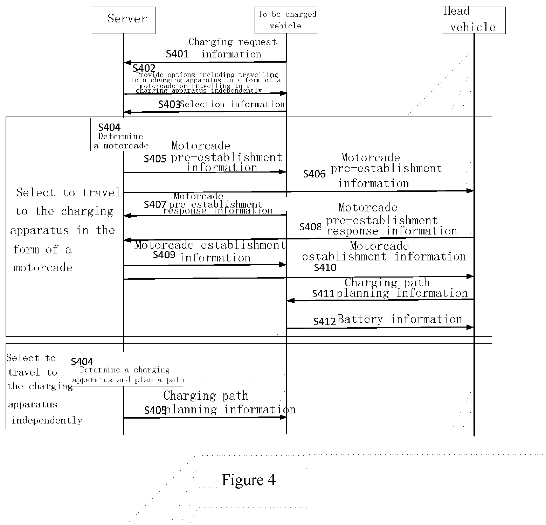

Figure 4 is a signaling flow chart showing that a server provides options including travelling to a charging apparatus in a form of a motorcade or travelling to a charging apparatus independently for a to-be-charged vehicle according to an embodiment of the present disclosure. In Figure 4, the to-be-charged vehicle may be implemented by the electronic device 100. As shown in Figure 4, in step S401, the to-be-charged vehicle sends charging request information to a server. As described above, step S401 may be omitted. Next, in step S402, the server provides options including travelling to a charging apparatus in a form of a motorcade or travelling to a charging apparatus independently for the to-be-charged vehicle. Next, in step S403, the to-be-charged vehicle sends selection information to the server. In a case where the selection information indicates that the to-be-charged vehicle selects to travel to the charging apparatus in the form of a motorcade, operations may be performed in the manner shown in Figure 2. For example, in step S404, the server determines a motorcade for the to-be-charged vehicle. A destination charging apparatus of the motorcade is the same as the charging apparatus of the to-be-charged vehicle. In addition, a head vehicle in the motorcade obtains path planning information from the server. Next, in step S405, the server sends motorcade pre-establishment information to the to-be-charged vehicle. The motorcade pre-establishment information may include identification information of the head vehicle. Next, in step S406, the server sends motorcade pre-establishment information to the head vehicle. The motorcade pre-establishment information may include identification information of the to-be-charged vehicle. Next, in step S407, the to-be-charged vehicle sends motorcade pre-establishment response information to the server, including information indicating that the to-be-charged vehicle agrees or disagrees to join in the motorcade. Next, in step S408, the head vehicle sends motorcade pre-establishment response information to the server, including information indicating that the head vehicle agrees or disagrees that the to-be-charged vehicle joins in the motorcade. Here, it is assumed that both the to-be-charged vehicle and the head vehicle agree that the to-be-charged vehicle joins in the motorcade. In step S409, the server sends motorcade establishment information to the to-be-charged vehicle. In addition, in step S410, the server sends the motorcade establishment information to the head vehicle, so as to establish a motorcade. Next, in step S411, the head vehicle sends charging path planning information to the to-be-charged vehicle. In step S412, the to-be-charged vehicle sends battery information to the head vehicle. In this way, the to-be-charged vehicle joins in the motorcade where the head vehicle is located and travels to the charging apparatus. In addition, in a case where the selection information indicates that the to-be-charged vehicle selects to travel to the charging apparatus independently, operations may be performed in the manner shown in Figure 3. For example, in step S404, the server may determine a charging apparatus for the to-be-charged vehicle and plans a charging path from the to-be-charged vehicle to the charging apparatus. Next, in step S405, the server sends charging path planning information to the to-be-charged vehicle. In this way, the to-be-charged vehicle may travel to the charging apparatus independently.

As described above, according to the embodiment of the present disclosure, the server may provide two options including travelling in a form of a motorcade and travelling independently for the to-be-charged vehicle, and perform subsequent operations according to the selection of the to-be-charged vehicle. In this way, the server may determine a charging manner for the to-be-charged vehicle according to a demand of the to-be-charged vehicle, so as to make the charging manner more reasonable.

According to an embodiment of the present disclosure, as shown in Figure 1, the electronic device 100 may further include a state information reporting unit 180. The state information reporting unit 180 is configured to send vehicle state information of the electronic device 100 to the server. The vehicle state information includes one or more of the following: positional information of a vehicle, battery information of a vehicle and road condition information.

Here, the electronic device 100 may periodically report the vehicle state information to the server, or report the vehicle state information in response to a request of the server. In this way, the server may determine whether the vehicle is required to be charged, plan the charging path for the vehicle and the like according to the vehicle state information.

It can be seen that the electronic device 100 according to the embodiment of the present disclosure may travel to a charging apparatus in a form of a motorcade for charging, and a head vehicle in the motorcade sends path planning information to the electronic device 100, so that the electronic device 100 can join in the motorcade. In this way, it is unnecessarily for multiple to-be-charged vehicles to respectively obtain the path planning information and respectively travel to the charging apparatus, the multiple to-be-charged vehicles may travel to the charging apparatus in the form of a motorcade for charging, thereby avoiding repeated sending of the path planning information and waste of resources. Further, according to the embodiment of the present disclosure, the electronic device 100 may further travel to the charging apparatus independently. In this way, the electronic device 100 can quickly arrive at the charging apparatus and avoid queuing. In addition, according to the embodiment of the present disclosure, the server may provide two options including travelling in the form of a motorcade and travelling independently for the electronic device 100, and perform subsequent operations according to the selection of the electronic device 100. In this way, the server may determine a charging manner for the electronic device 100 according to a demand of the electronic device 100, so as to make the charging manner more reasonable.

### [2. Configuration Examples of Server according to First Embodiment]

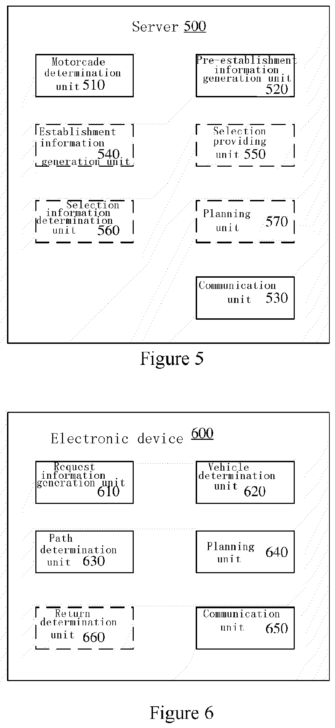

Figure 5 is a structural block diagram of a server 500 according to an embodiment of the present disclosure. The server 500 may be arranged in a near end device such as a roadside device or in a remote device such as a cloud. Further, the server 500 may further be arranged in a base station device.

As shown in Figure 5, the server 500 may include a motorcade determination unit 510, a pre-establishment information generation unit 520, and a communication unit 530.

Here, each unit of the server 500 may be included in processing circuitry. It should be noted that, the server 500 may include one processing circuitry or multiple processing circuitries. Furthermore, the processing circuitry may include various discrete functional units to perform various different functions and/or operations. It should be noted that these functional units may be physical entities or logical entities, and units with different names may be implemented by a same physical entity.

According to an embodiment of the present disclosure, the motorcade determination unit 510 may determine a motorcade for a to-be-charged vehicle, so that multiple vehicles including the to-be-charged vehicle travel to a charging apparatus in a form of a motorcade. Here, a head vehicle in the motorcade is a vehicle that obtains charging path planning information from the server 500.

According to an embodiment of the present disclosure, the pre-establishment information generation unit 520 may generate motorcade pre-establishment information. The motorcade pre-establishment information includes information of the head vehicle. Further, the server 500 may send the motorcade pre-establishment information to the to-be-charged vehicle through the communication unit 530.

It can be seen that the server 500 according to an embodiment of the present disclosure may dynamically determine a motorcade for a to-be-charged vehicle, so that the to-be-charged vehicle may travel to the charging apparatus in the form of a motorcade for charging. In this way, repeated sending of the path planning information and waste of resources can be avoided.

According to an embodiment of the present disclosure, the server 500 may receive charging request information from the to-be-charged vehicle through the communication unit 530. Further, the server 500 may determine that the to-be-charged vehicle is required to be charged in response to the charging request information, so as to determine a motorcade for the to-be-charged vehicle.

According to an embodiment of the present disclosure, the server 500 may further determine a vehicle that is required to be charged as the to-be-charged vehicle according to battery information of each of the vehicles. For example, the server 500 may receive vehicle state information from each of multiple vehicles managed by the server 500. The vehicle state information may include battery information. When power of a battery of a vehicle is lower than a predetermined threshold, the server 500 may determine that the vehicle is required to be charged, so as to determine a motorcade for the vehicle.

According to an embodiment of the present disclosure, the motorcade determination unit 510 may select a head vehicle from vehicles that obtain charging path planning information from the server 500. Specifically, the server may determine a charging apparatus for the to-be-charged vehicle according to positional information of the to-be-charged vehicle, and select a head vehicle from vehicles that obtain the charging path planning information and a destination charging apparatus of the vehicles is the same as a charging apparatus of the to-be-charged vehicle.

For example, the motorcade determination unit 510 may determine the head vehicle according to distances between vehicles that obtain the charging path planning information from the server 500 and the to-be-charged vehicle and/or road condition information. Specifically, the motorcade determination unit 510 may select a vehicle closest to the to-be-charged vehicle as the head vehicle from the vehicles that obtain the charging path planning information and a destination charging apparatus of the vehicles is the same as a charging apparatus of the to-be-charged vehicle. For example, the motorcade determination unit 510 may select a vehicle with the best road condition as the head vehicle from the vehicles that obtain the charging path planning information and a destination charging apparatus of the vehicles is the same as a charging apparatus of the to-be-charged vehicle. In addition, the motorcade determination unit 510 may further select the head vehicle according to other information of the vehicles that obtains the path planning information, such as battery information, the number of vehicles in the motorcade and the like.

According to an embodiment of the present disclosure, the pre-establishment information generation unit 520 may generate motorcade pre-establishment information that is sent to the to-be-charged vehicle, including, for example, identification information of the head vehicle. Further, the pre-establishment information generation unit 520 may further generate motorcade pre-establishment information that is sent to the head vehicle, including, for example, identification information of the to-be-charged vehicle.

According to an embodiment of the present disclosure, the server 500 may receive, from the to-be-charged vehicle, motorcade pre-establishment response information representing whether the to-be-charged vehicle agrees to join in the motorcade to travel to the charging apparatus through the communication unit 530. Further, the server 500 may further receive, from the head vehicle, motorcade pre-establishment response information representing whether the head vehicle agrees that the to-be-charged vehicle joins in the motorcade to travel to the charging apparatus through the communication unit 530.

According to an embodiment of the present disclosure, as shown in Figure 5, the server 500 may further include an establishment information generation unit 540. In a case where both the to-be-charged vehicle and the head vehicle agree that the to-be-charged vehicle joins in the motorcade, the establishment information generation unit 540 may generate motorcade establishment information representing establishment of a motorcade including the to-be-charged vehicle. Further, the server 500 may send the motorcade establishment information to the to-be-charged vehicle and the head vehicle through the communication unit 530, so that the to-be-charged vehicle forms a motorcade with the head vehicle, or the to-be-charged vehicle joins in a motorcade where the head vehicle is located.

According to an embodiment of the present disclosure, as shown in Figure 5, the server 500 may further include a selection providing unit 550. The selection providing unit 550 is configured to provide options including travelling to the charging apparatus in a form of a motorcade or travelling to the charging apparatus independently for the to-be-charged vehicle.

According to an embodiment of the present disclosure, the server 500 may further receive selection information from the to-be-charged vehicle through the communication unit 530. The selection information indicates that the to-be-charged vehicle selects to travel to the charging apparatus in the form of a motorcade or to the charging apparatus independently. As shown in Figure 5, the server 500 may further include a selection information determination unit 560. The selection information determination unit 560 is configured to determine that the to-be-charged vehicle selects to travel to the charging apparatus in the form of a motorcade or travel to the charging apparatus independently according to the selection information from the to-be-charged vehicle.

According to an embodiment of the present disclosure, in a case where the selection information determination unit 560 determines that the to-be-charged vehicle selects to travel to the charging apparatus in the form of a motorcade, the motorcade determination unit 510 may determine a motorcade for the to-be-charged vehicle.

According to an embodiment of the present disclosure, as shown in Figure 5, the server 500 may further include a planning unit 570. In a case where the selection information determination unit 560 determines that the to-be-charged vehicle selects to travel to the charging apparatus independently, the planning unit 570 may determine the charging apparatus and charging path planning information of the charging apparatus for the to-be-charged vehicle. Further, the server 500 may send the charging path planning information to the to-be-charged vehicle through the communication unit 530.

As described above, according to the embodiment of the present disclosure, the server may provide two options including travelling in a form of a motorcade and travelling independently for the to-be-charged vehicle, and perform subsequent operations according to the selection of the to-be-charged vehicle. In this way, the server may determine a charging manner for the to-be-charged vehicle according to a demand of the to-be-charged vehicle, so as to make the charging manner more reasonable.

According to an embodiment of the present disclosure, the server 500 may further receive, from each of the vehicles, vehicle state information of the vehicle through the communication unit 530. The vehicle state information includes one or more of the following: positional information of a vehicle, battery information of a vehicle and road condition information. Therefore, the server 500 may determine whether a vehicle is required to be charged according to the battery information of the vehicle. Further, the server 500 may determine the charging path planning information according to the positional information of the vehicle, the battery information of the vehicle and/or the road condition information.

The server 500 according to the embodiment of the present disclosure may provide services for the electronic device 100, and thus all the embodiments of the electronic device 100 described above are applicable to this.

### [3. Configuration Examples of Electronic Device according to Second Embodiment]

Figure 6 is a block diagram showing a configuration example of an electronic device 600 for a vehicle according to another embodiment of the present disclosure. Here, the electronic device 600 may be an electronic device integrated in the vehicle or an on-board electronic device separated from the vehicle. In addition, the vehicle may be an electric vehicle.

As shown in Figure 6, the electronic device 600 may include a request information generation unit 610, a vehicle determination unit 620, a path determination unit 630, a planning unit 640, and a communication unit 650.

Here, each unit of the electronic device 600 may be included in processing circuitry. It should be noted that, the electronic device 600 may include one processing circuitry or multiple processing circuitries. Furthermore, the processing circuitry may include various discrete functional units to perform various different functions and/or operations. It should be noted that these functional units may be physical entities or logical entities, and units with different names may be implemented by a same physical entity.

According to an embodiment of the present disclosure, the request information generation unit 610 may generate charging request information that requests vehicles around the electronic device 600 to charge the electronic device 600. Further, the electronic device 600 may send the charging request information to the vehicles around the electronic device 600 through the communication unit 650.

According to an embodiment of the present disclosure, the electronic device 600 may receive, from a vehicle around the electronic device 600, information indicating that the vehicle around the electronic device 600 agrees to charge the electronic device 600. Further, the vehicle determination unit 620 may determine a vehicle among vehicles that agree to charge the electronic device 600 as a charging vehicle.

According to an embodiment of the present disclosure, the electronic device 600 may receive charging path planning information from the charging vehicle through the communication unit 650. Further, the path determination unit 630 may determine information related to a charging path according to the charging path planning information.

According to an embodiment of the present disclosure, the planning unit 640 may plan the charging path according to the information related to the charging path, so that the electronic device 600 may travel to the charging vehicle. Therefore, the charging vehicle may charge the electronic device 600.

As described above, the electronic device 600 according to the embodiment of the present disclosure may select a charging vehicle from vehicles around the electronic device 600, so that the electronic device 600 travels to the charging vehicle. In this way, the vehicles around the electronic device 600 may charge the electronic device 600. Compared with the method of arriving at a charging apparatus for charging, according to the method, the electronic device 600 can be charged as soon as possible, especially when remaining power of a battery of the electronic device 600 is low.

According to an embodiment of the present disclosure, the electronic device 600 may send charging request information to the vehicles around the electronic device 600 by broadcasting.

According to an embodiment of the present disclosure, the electronic device 600 may further receive charging response information, from a vehicle around the electronic device 600, indicating that the vehicle agrees to charge the electronic device 600 through the communication unit 650. The charging response information includes battery information of the vehicle around the electronic device 600. Further, the vehicle determination unit 620 may determine a charging vehicle according to the battery information of the vehicle that agrees to charge the electronic device 600 and required power of the electronic device 600.

Here, the vehicle determination unit 620 may select a vehicle whose power of a battery is greater than the required power of the electronic device 600 among the vehicles that agree to charge the electronic device 600 as the charging vehicle. In a selection process, the vehicle determination unit 620 may select a vehicle as the charging vehicle according to one or more of battery information, positional information, road condition information and the like. For example, the vehicle determination unit 620 may select a vehicle with the largest battery power as the charging vehicle, select a vehicle closest to the electronic device 600 as the charging vehicle, select a vehicle with the best road condition from the vehicle to the electronic device 600 as the charging vehicle or the like, which is not limited in the present disclosure.

According to an embodiment of the present disclosure, after the vehicle determination unit 620 determines the charging vehicle, the electronic device 600 may send charging vehicle confirmation information to the charging vehicle.

According to an embodiment of the present disclosure, the electronic device 600 may receive charging path planning information from the charging vehicle through the communication unit 650. The charging path planning information may include positional information of the charging vehicle. Alternatively, the charging path planning information may further include road condition information on a charging path. The charging path herein includes a path from the electronic device 600 to the charging vehicle.

According to an embodiment of the present disclosure, the electronic device 600 may further receive return strategy information from the charging vehicle through the communication unit 650. As shown in Figure 6, the electronic device 600 may further include a return determination unit 660. The return determination unit 660 is configured to determine whether a return strategy sent by the charging vehicle is accepted. In a case where the return strategy sent by the charging vehicle is not accepted, the return determination unit 660 may further generate new return strategy information. That is, the return determination unit 660 is configured to manage a return for the charging vehicle charging the electronic device 600. After the electronic device 600 and the charging vehicle negotiate the return strategy, the electronic device 600 may travel to the charging vehicle for charging and pay the return to the charging vehicle according to the return strategy.

According to an embodiment of the present disclosure, the electronic device 600 may communicate with a charging vehicle in a short-range communication manner. For example, the electronic device 600 may communicate with a charging vehicle through a sidelink between vehicles.

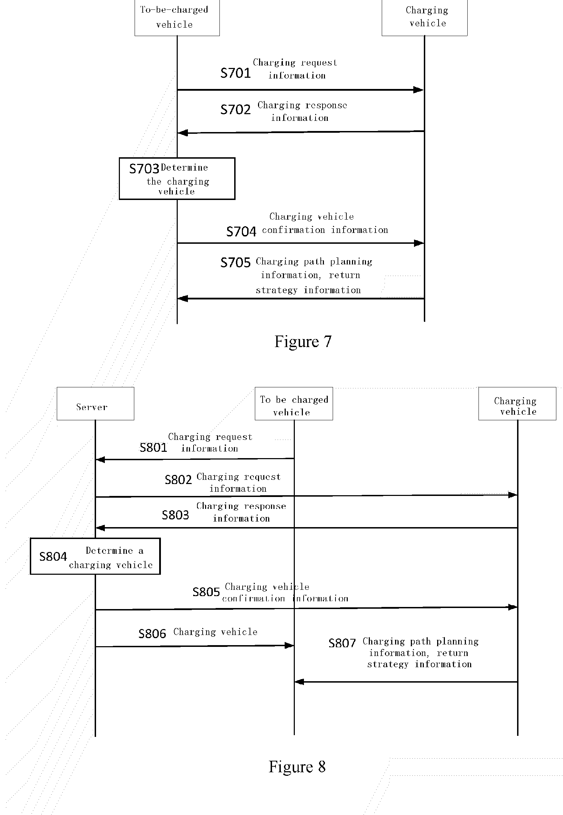

Figure 7 is a signaling flow chart showing that a charging vehicle charges a to-be-charged vehicle according to an embodiment of the present disclosure. In Figure 7, the to-be-charged vehicle may be implemented by the electronic device 600. As shown in Figure 7, in step S701, the to-be-charged vehicle sends charging request information to vehicles around the to-be-charged vehicle. Next, in step S702, vehicles among the vehicles around the to-be-charged vehicle that agree to charge the to-be-charged vehicle may send charging response information to the to-be-charged vehicle. Next, in step S703, the to-be-charged vehicle determines a charging vehicle from the vehicles that agree to charge the to-be-charged vehicle. Next, in step S704, the to-be-charged vehicle sends charging vehicle confirmation information to the charging vehicle. Next, in step S705, the charging vehicle sends charging path planning information to the to-be-charged vehicle. Alternatively, the charging vehicle may further send return strategy information to the to-be-charged vehicle. Therefore, the to-be-charged vehicle may travel to the charging vehicle for charging according to the charging path planning information, and pay a return to the charging vehicle according to a negotiated return strategy.

As described above, according to the embodiment of the present disclosure, the to-be-charged vehicle may send the charging request information to the vehicles around the to-be-charged vehicle by broadcasting and determine a charging vehicle. According to the embodiment of the present disclosure, the to-be-charged vehicle may further send charging request information to a server, so that the server sends charging request information to the vehicles around the to-be-charged vehicle, so as to determine the charging vehicle.

That is, according to the embodiment of the present disclosure, the electronic device 600 may send the charging request information to the server. Next, the electronic device 600 may receive charging vehicle confirmation information from the server. Next, the electronic device 600 may receive charging path planning information from the charging vehicle. Next, the electronic device 600 may travel to the charging vehicle according to the charging path planning information. Preferably, the charging path planning information includes the positional information of the charging vehicle. Preferably, the electronic device 600 may further receive return strategy information from the charging vehicle. Here, the electronic device 600 may communicate with the charging vehicle in the short-range communication manner.

Figure 8 is a signaling flow chart showing a charging vehicle charging to a to-be-charged vehicle according to an embodiment of the present disclosure. In Figure 8, the to-be-charged vehicle may be implemented by the electronic device 600. As shown in Figure 8, in step S801, the to-be-charged vehicle sends charging request information to a server. Next, in step S802, the server sends the charging request information to vehicles around the to-be-charged vehicle. Next, in step S803, vehicles among the vehicles around the to-be-charged vehicle that agree to charge the to-be-charged vehicle may send charging response information to the server. Next, in step S804, the server determines a charging vehicle from the vehicles that agree to charge the to-be-charged vehicle. Next, in step S805, the server sends charging vehicle confirmation information to the charging vehicle. In step S806, the server sends charging vehicle confirmation information to the to-be-charged vehicle. Next, in step S807, the charging vehicle sends charging path planning information to the to-be-charged vehicle. Alternatively, the charging vehicle may further send return strategy information to the to-be-charged vehicle. Therefore, the to-be-charged vehicle may travel to the charging vehicle for charging according to the charging path planning information, and pay a return to the charging vehicle according to a negotiated return strategy.

As described above, according to the embodiment of the present disclosure, the electronic device 600 or the server may select a charging vehicle from vehicles around the electronic device 600, so that the to-be-charged vehicle travels to the charging vehicle. In this way, the vehicles around the electronic device 600 may charge the electronic device 600. Compared with the method of arriving at a charging apparatus for charging, according to the method, the electronic device 600 can be charged as soon as possible, especially when remaining power of a battery of the electronic device 600 is low.

### [4. Configuration Examples of Server according to Second Embodiment]

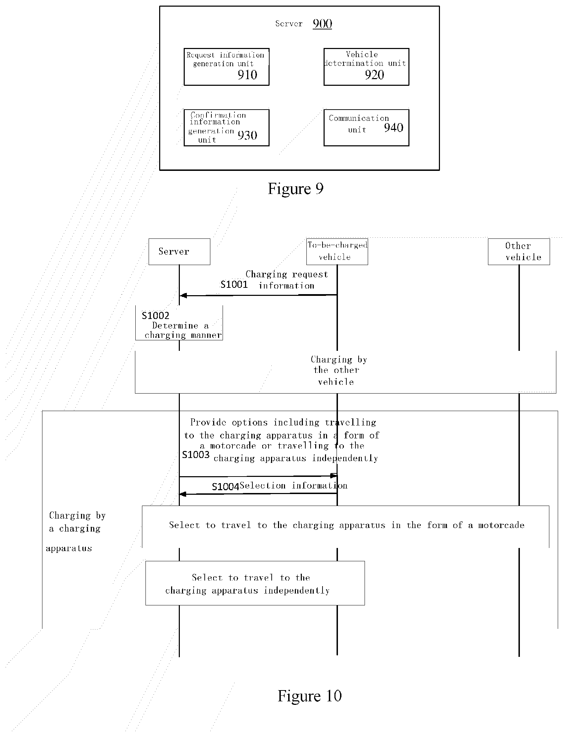

Figure 9 is a structural block diagram of a server 900 according to an embodiment of the present disclosure. The server 900 may be arranged in a near end device such as a roadside device or in a remote device such as a cloud. Further, the server 900 may further be arranged in a base station device.

As shown in Figure 9, the server 900 may include a request information generation unit 910, a vehicle determination unit 920, a confirmation information generation unit 930, and a communication unit 940.

Here, each unit of the server 900 may be included in processing circuitry. It should be noted that, the server 900 may include one processing circuitry or multiple processing circuitries. Furthermore, the processing circuitry may include various discrete functional units to perform various different functions and/or operations. It should be noted that these functional units may be physical entities or logical entities, and units with different names may be implemented by a same physical entity.

According to an embodiment of the present disclosure, the server 900 may receive charging request information from a to-be-charged vehicle through the communication unit 940. Alternatively, the server 900 may determine that a vehicle is required to be charged according to battery information of vehicles managed by the server 900, so as to determine the vehicle as the to-be-charged vehicle.

According to an embodiment of the present disclosure, the request information generation unit 910 may generate charging request information that requests vehicles around the to-be-charged vehicle to charge the to-be-charged vehicle. Further, the server 900 may send the charging request information to the vehicles around the to-be-charged vehicle through the communication unit 940.

According to an embodiment of the present disclosure, the vehicle determination unit 920 may determine a charging vehicle among vehicles that agree to charge the to-be-charged vehicle.

According to an embodiment of the present disclosure, the confirmation information generation unit 930 may generate charging vehicle confirmation information. Further, the server 900 may send the charging vehicle confirmation information to the to-be-charged vehicle and the charging vehicle through the communication unit 940, so that the charging vehicle can charge the to-be-charged vehicle.

According to an embodiment of the present disclosure, the server 900 may receive charging response information, from a vehicle around the to-be-charged vehicle, indicating that the vehicle agrees to charge the to-be-charged vehicle. The charging response information includes battery information of the vehicle around the to-be-charged vehicle. The vehicle determination unit 920 may determine a charging vehicle according to the battery information of the vehicle that agrees to charge the to-be-charged vehicle and required power of the to-be-charged vehicle.

Here, the vehicle determination unit 920 may select a vehicle whose power of a battery is greater than the required power of the to-be-charged vehicle among the vehicles that agree to charge the to-be-charged vehicle as the charging vehicle. In a selection process, the vehicle determination unit 920 may select a vehicle as the charging vehicle according to one or more of battery information, positional information, road condition information and the like. For example, the vehicle determination unit 920 may select a vehicle with the largest battery power as the charging vehicle, select a vehicle closest to the to-be-charged vehicle as the charging vehicle, select a vehicle with the best road condition from the vehicle to the to-be-charged vehicle as the charging vehicle or the like, which is not limited in the present disclosure.

According to an embodiment of the present disclosure, the charging vehicle confirmation information sent to the to-be-charged vehicle that is generated by the confirmation information generation unit 930 may include identification information of the charging vehicle. The charging vehicle confirmation information sent to the charging vehicle may include information indicating that the server agrees that the charging vehicle charges the to-be-charged vehicle.

As described above, according to the embodiment of the present disclosure, the server may select a charging vehicle from vehicles around the to-be-charged vehicle. In this way, the vehicles around the to-be-charged vehicle may charge the to-be-charged vehicle. Compared with the method of arriving at a charging apparatus for charging, according to the method, the to-be-charged vehicle can be charged as soon as possible, especially when remaining power of a battery of the to-be-charged vehicle is low.

As described above, according to the embodiment of the present disclosure, the to-be-charged vehicle may travel to a charging apparatus for charging or travel to a charging vehicle for charging. The server may determine a charging manner for the to-be-charged vehicle. The charging manner includes charging by the charging apparatus and charging by the charging vehicle. For example, the server may determine the charging manner according to the battery information of the to-be-charged vehicle. Specifically, when power of a battery of the to-be-charged vehicle is low, the server may determine the charging manner in which the to-be-charged vehicle is charged by the charging vehicle. When the power of the battery of the to-be-charged vehicle is high, the server may determine the charging manner in which the to-be-charged vehicle is charged by the charging apparatus. In this way, the server may reasonably determine the charging manner according to the battery information of the to-be-charged vehicle.

Figure 10 is a signaling flow chart showing that a server determines a charging manner according to an embodiment of the present disclosure. In Figure 10, the to-be-charged vehicle may be implemented by the electronic device 600. The server may be implemented by the server 900. As shown in Figure 10, in step S1001, the to-be-charged vehicle sends charging request information to the server. In addition, this step may be omitted. Next, in step S1002, the server determines the charging manner of the to-be-charged vehicle. In a case where the server determines that the to-be-charged vehicle is charged by a charging vehicle, operations may be performed according to, for example, steps S802 to S807 shown in Figure 8, which is not described redundantly herein. In a case where the server determines that the to-be-charged vehicle is charged by a charging apparatus, in step S1003, the server provides options including travelling to the charging apparatus in a form of a motorcade or travelling to the charging apparatus independently for the to-be-charged vehicle. Next, in step S1004, the to-be-charged vehicle sends selection information to the server. Next, in a case where the to-be-charged vehicle select to travel to the charging apparatus in the form of a motorcade, operations may be performed according to, for example, steps S202 to S210 shown in Figure 2, which is not described redundantly herein. In a case where the to-be-charged vehicle select to the charging apparatus independently, operations may be performed according to, for example, steps S302 to S303 shown in Figure 3, which is not described redundantly herein.

The server 900 according to the embodiment of the present disclosure may provide services for the electronic device 600, and thus all the embodiments of the electronic device 600 described above are applicable to this.

### [5. Method Embodiments]

Hereinafter, a wireless communication method performed by the electronic device 100 for a vehicle according to an embodiment of the present disclosure is described in detail.

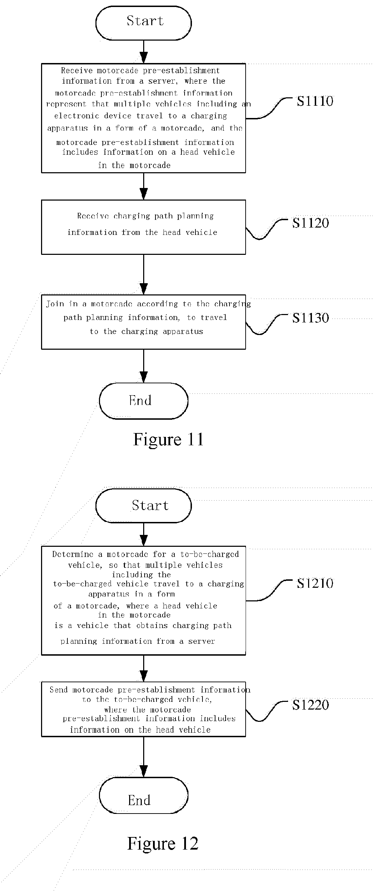

Figure 11 is a flow chart of a wireless communication method performed by the electronic device 100 according to an embodiment of the present disclosure.

As shown in Figure 11, in step S1110, motorcade pre-establishment information is received from a server. The motorcade pre-establishment information may represent that multiple vehicles including the electronic device 100 travel to a charging apparatus in a form of a motorcade, and the motorcade pre-establishment information includes information on a head vehicle in the motorcade.

Next, in step S1120, charging path planning information is received from the head vehicle.

Next, in step S1130, the electronic device 100 joins in the motorcade according to the charging path planning information, to travel to the charging apparatus.

In an embodiment, the wireless communication method further includes sending charging request information to the server.

In an embodiment, the wireless communication method further includes sending, to the server, motorcade pre-establishment response information representing whether the electronic device 100 agrees to join in the motorcade to travel to the charging apparatus in response to the motorcade pre-establishment information.

In an embodiment, the wireless communication method further includes sending battery information of the electronic device 100 to the head vehicle.

In an embodiment, the charging path planning information includes positional information of the head vehicle and positional information of the charging apparatus.

In an embodiment, the charging path planning information further includes road condition information on a charging path.

In an embodiment, the electronic device 100 communicates with the head vehicle in a short-range communication manner.

In an embodiment, the wireless communication method further includes selecting to travel to the charging apparatus in the form of a motorcade or to travel to the charging apparatus independently, send selection information representing an option of the electronic equipment 100 to the server, and receiving the motorcade pre-establishment information from the server in a case where it is selected to travel to the charging apparatus in the form of a motorcade.

In an embodiment, the wireless communication method further includes receiving, from the server, charging path planning information for travelling to the charging apparatus, in a case where it is selected to travel to the charging apparatus independently, and travelling to the charging apparatus independently according to the charging path planning information.

In an embodiment, the wireless communication method further includes sending vehicle state information of the electronic device 100 to the server. The vehicle state information includes one or more of the following: positional information of a vehicle, battery information of a vehicle and road condition information.

According to the embodiment of the present disclosure, the method describe above may be performed by the electronic device 100 according to the embodiment of the present disclosure, and thus all the embodiments of the electronic device 100 described above are applicable to this.

Hereinafter, a wireless communication method performed by the server 500 according to an embodiment of the present disclosure is described in detail.

Figure 12 is a flow chart of a wireless communication method performed by the server 500 according to an embodiment of the present disclosure.

As shown in Figure 12, in step S1210, a motorcade is determined for a to-be-charged vehicle, so that multiple vehicles including the to-be-charged vehicle travel to a charging apparatus in a form of a motorcade. A head vehicle in the motorcade is a vehicle that obtains charging path planning information from the server 500.

Next, in step S1220, motorcade pre-establishment information is sent to the to-be-charged vehicle. The motorcade pre-establishment information includes information on the head vehicle.

In an embodiment, the wireless communication method further includes receiving charging request information from the to-be-charged vehicle.

In an embodiment, the wireless communication method further includes determining a vehicle that is required to be charged as the to-be-charged vehicle according to battery information of each of the vehicles.

In an embodiment, the wireless communication method further includes sending motorcade pre-establishment information to the head vehicle. The motorcade pre-establishment information includes information of the to-be-charged vehicle.

In an embodiment, the wireless communication method further includes receiving, from the to-be-charged vehicle, motorcade pre-establishment response information representing whether the to-be-charged vehicle agrees to join in the motorcade to travel to the charging apparatus.

In an embodiment, the wireless communication method further includes receiving, from the head vehicle, motorcade pre-establishment response information representing whether the head vehicle agrees that the to-be-charged vehicle joins in the motorcade to travel to the charging apparatus.

In an embodiment, the wireless communication method further includes determine the head vehicle according to distances between the vehicles that obtains the charging path planning information from the server and the to-be-charged vehicle.

In an embodiment, the wireless communication method further includes providing options including travelling to the charging apparatus in a form of a motorcade or travelling to the charging apparatus independently for the to-be-charged vehicle; receiving selection information from the to-be-charged vehicle; and determining a motorcade for the to-be-charged vehicle in a case where the to-be-charged vehicle selects to travel to the charging apparatus in the form of a motorcade.

In an embodiment, the wireless communication method further includes determining the charging apparatus and charging path planning information of the charging apparatus for the to-be-charged vehicle in a case where the to-be-charged vehicle selects to travel to the charging apparatus independently.

In an embodiment, the wireless communication method further includes receiving, from each of the vehicles, vehicle state information of the vehicle. The vehicle state information includes one or more of the following: positional information of a vehicle, battery information of a vehicle and road condition information.

According to the embodiment of the present disclosure, the method describe above may be performed by the server 500 according to the embodiment of the present disclosure, and thus all the embodiments of the server 500 described above are applicable to this.

Hereinafter, a wireless communication method performed by the electronic device 600 according to an embodiment of the present disclosure is described in detail.

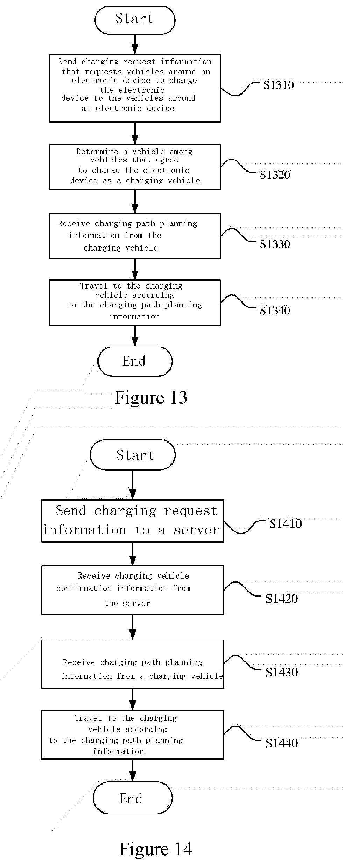

Figure 13 is a flow chart of a wireless communication method performed by the electronic device 600 for a vehicle according to an embodiment of the present disclosure.

As shown in Figure 13, in step S1310, charging request information that requests vehicles around the electronic device 600 to charge the electronic device 600 is sent to the vehicles around the electronic device 600.

Next, in step S1320, a vehicle among vehicles that agree to charge the electronic device 600 is determined as a charging vehicle.

Next, in step S1330, charging path planning information is received from the charging vehicle.

Next, in step S1340, the electronic device 600 travels to the charging vehicle according to the charging path planning information.

In an embodiment, the wireless communication method further includes: receiving, from a vehicle among the vehicles around the electronic device 600, confirmation information indicating the vehicle agrees to charge the electronic device 600, where the confirmation information includes battery information of the vehicle; and determining a charging vehicle according to the battery information of the vehicle that agrees to charge the electronic device 600 and required power of the electronic device 600.

In an embodiment, the charging path planning information includes positional information of the charging vehicle.

In an embodiment, the wireless communication method further includes receiving return strategy information from the charging vehicle.

In an embodiment, the wireless communication method further includes sending charging request information to the vehicles around the electronic device 600 by broadcasting.

In an embodiment, the wireless communication method further includes communicating with the charging vehicle in a short-range communication manner.

According to the embodiment of the present disclosure, the method describe above may be performed by the electronic device 600 according to the embodiment of the present disclosure, and thus all the embodiments of the electronic device 600 described above are applicable to this.

Hereinafter, a wireless communication method performed by the electronic device 600 for a vehicle according to another embodiment of the present disclosure is described in detail.

Figure 14 is a flow chart of a wireless communication method performed by the electronic device 600 for a vehicle according to another embodiment of the present disclosure.

As shown in Figure 14, in step S1410, charging request information is sent to a server.

Next, in step S1420, charging vehicle confirmation information is received from the server.

Next, in step S1430, charging path planning information is received from a charging vehicle.

Next, in step S1440, the electronic device 600 travels to the charging vehicle according to the charging path planning information.

In an embodiment, the charging path planning information includes positional information of the charging vehicle.

In an embodiment, the wireless communication method further includes receiving return strategy information from the charging vehicle.

In an embodiment, the wireless communication method further includes communicating with the charging vehicle in a short-range communication manner.

According to the embodiment of the present disclosure, the method describe above may be performed by the electronic device 600 according to the embodiment of the present disclosure, and thus all the embodiments of the electronic device 600 described above are applicable to this.

Hereinafter, a wireless communication method performed by the server 900 according to an embodiment of the present disclosure is described in detail.

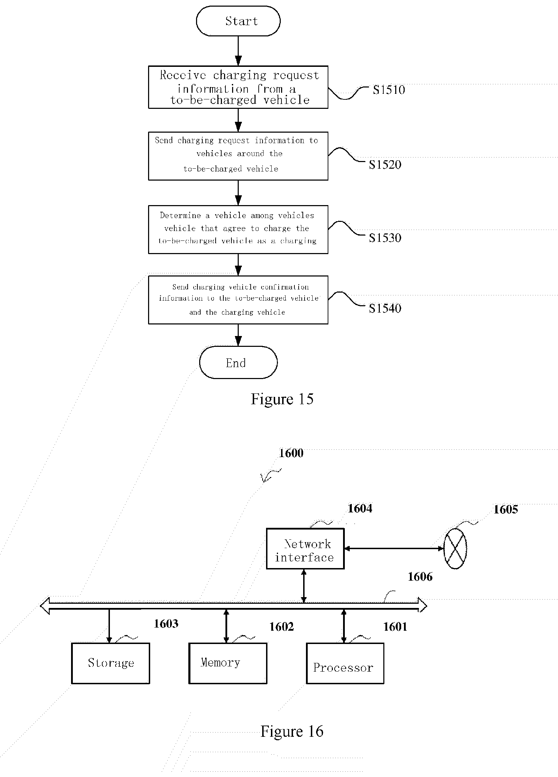

Figure 15 is a flow chart of a wireless communication method performed by the server 900 according to an embodiment of the present disclosure.

As shown in Figure 15, in step S1510, charging request information is received from a to-be-charged vehicle.

Next, in step S1520, charging request information that requests vehicles around the to-be-charged vehicle to charge the to-be-charged vehicle is sent to the vehicles around the to-be-charged vehicle.

Next, in step S1530, a vehicle among vehicles that agree to charge the to-be-charged vehicle is determined as a charging vehicle.

Next, in step S1540, charging vehicle confirmation information is sent to the to-be-charged vehicle and the charging vehicle, so that the charging vehicle can charge the to-be-charged vehicle.

In an embodiment, the wireless communication method further includes receiving charging response information, from a vehicle around the to-be-charged vehicle, indicating that the vehicle agrees to charge the to-be-charged vehicle, where the charging response information includes battery information of the vehicle around the to-be-charged vehicle; and determining a charging vehicle according to the battery information of the vehicle that agrees to charge the to-be-charged vehicle and required power of the to-be-charged vehicle.

In an embodiment, charging vehicle confirmation information sent to the to-be-charged vehicle may include identification information of the charging vehicle. Charging vehicle confirmation information sent to the charging vehicle may include information indicating that the charging vehicle agrees to charge the to-be-charged vehicle.

According to the embodiment of the present disclosure, the method describe above may be performed by the server 900 according to the embodiment of the present disclosure, and thus all the embodiments of the server 900 described above are applicable to this.

### [6. Application Examples]

The technology of the present disclosure may be applied to various products. For example, the server 500 and the server 900 may be implemented as any type of server, such as a tower server, a rack server, and a blade server. The server 500 and the server 900 may be a control module (such as an integrated circuit module including a single chip, and a card or a blade inserted into a slot of the blade server) mounted on a server. In addition, the server 500 and the server 900 may be integrated in, for example, a network side device in a base station device, or may be arranged in a cloud.

Figure 16 is a block diagram showing an example of a server 1600 implemented by the server 500 and the server 900 according to the present disclosure. The server 1600 includes a processor 1601, a memory 1602, a storage 1603, a network interface 1604 and a bus 1606.

The processor 1601 may be, for example, a central processing unit (CPU), or a digital signal processing (DSP), and controls functions of the server 1600. The memory 1602 includes a random access memory (RAM) and a read only memory (ROM), and stores a program that is executed by the processor 1601 and data. The storage 1603 may include a storage medium such as a semiconductor memory and a hard disk.

The network interface 1604 is a wired communication interface for connecting the server 1600 to a wired communication network 1605. The wired communication network 1605 may be a core network such as an evolved packet core network (EPC) or a packet data network (PDN) such as the Internet.

The bus 1606 connects the processor 1601, the memory 1602, the storage 1603, and the network interface 1604 to each other. The bus 1606 may include two or more buses each having a different speed (such as a high speed bus and a low speed bus).

In the server 1600 shown in Figure 16, the motorcade determination unit 510, the pre-establishment information generation unit 520, the establishment information generation unit 540, the selection providing unit 550, the selection information determination unit 560, and the planning unit 570 described in Figure 5, and the request information generation unit 910, the vehicle determination unit 920 and the confirmation information generation unit 930 described in Figure 9 may be implemented by the processor 1601. In addition, the communication unit 530 described in Figure 5 and the communication unit 940 described in Figure 9 may be implemented by the network interface 1604. For example, the processor 1601 may implement functions of determining a motorcade, generating motorcade pre-establishment information, generating motorcade establishment information, providing options including travelling to a charging apparatus in a form of a motorcade or travelling to the charging apparatus independently, determining selection information sent by a vehicle, planning a path for the vehicle, generating request information, determining a charging vehicle and generating charging vehicle confirmation information by executing instructions stored in the memory 1602 or the storage 1603.

Preferred embodiments of the present disclosure are described above with reference to the drawings. However, the present disclosure is not limited to the examples. Those skilled in the art may obtain various changes and modifications within the scope of the claims. In addition, it should be understood that these changes and modifications naturally fall within the technical scope of the present disclosure.

For example, in the functional block diagrams shown in the drawings, a unit shown in dotted lines indicates that the functional unit is optional in the device, and optional functional units may be combined in an appropriate way to implement a required function.

For example, in the above embodiments, multiple functions in one unit may be implemented by respective devices. Alternatively, in the above embodiments, multiple functions in multiple units may be respectively implemented by independent devices. In addition, one of the above functions may be implemented by multiple units. Needless to say, such configuration is within the technical scope of the present disclosure.

In the present disclosure, steps described in the flow charts are not limited to be performed in a chronological order, but may also be performed in parallel or independently rather than necessarily being in the time order. In addition, in a case where the steps are performed in the chronological order, needless to say, the order may also be changed appropriately.

Although the embodiments of the present disclosure are described above in conjunction with the drawings, it should be understood that the embodiments are only used to illustrate the present disclosure rather than limit the present disclosure. For those skilled in the art, various changes and modifications may be made for the embodiments without departing from the essence and scope of the present disclosure. Therefore, the scope of the present disclosure is defined only by the claims and equivalent meaning thereof.

## Claims

1. An electronic device for a vehicle, comprising processing circuitry configured to:
receive motorcade pre-establishment information from a server, wherein the motorcade pre-establishment information represents that a plurality of vehicles comprising the electronic device travel to a charging apparatus in a form of a motorcade and the motorcade pre-establishment information comprises information on a head vehicle of the motorcade;
receive charging path planning information from the head vehicle; and
join in the motorcade according to the charging path planning information to travel to the charging apparatus.

2. The electronic device according to claim 1, wherein the processing circuitry is further configured to:
send charging request information to the server.

3. The electronic device according to claim 1, wherein the processing circuitry is further configured to:
send, in response to the motorcade pre-establishment information, to the server, motorcade pre-establishment response information representing whether the electronic device agrees to join in the motorcade to travel to the charging apparatus.

4. The electronic device according to claim 1, wherein the processing circuitry is further configured to:
send battery information of the electronic device to the head vehicle.

5. The electronic device according to claim 1, wherein the charging path planning information comprises positional information of the head vehicle and positional information of the charging apparatus.

6. The electronic device according to claim 5, wherein the charging path planning information further comprises road condition information on a charging path.

7. The electronic device according to any one of claims 1 to 6, wherein the processing circuitry is further configured to:
communicate with the head vehicle in a short-range communication manner.

8. The electronic device according to claim 1, wherein the processing circuitry is further configured to:
select to travel to the charging apparatus in the form of a motorcade or to travel to the charging apparatus independently;
send, to the server, selection information representing the selection; and
receive the motorcade pre-establishment information from the server, in a case where it is selected to travel to the charging apparatus in the form of a motorcade.

9. The electronic device according to claim 8, wherein the processing circuitry is further configured to:
receive, from the server, charging path planning information for traveling to the charging apparatus, in a case where it is selected to travel to the charging apparatus independently; and
travel to the charging apparatus independently according to the charging path planning information.

10. The electronic device according to claim 1, wherein the processing circuitry is further configured to:
send vehicle state information of the electronic device to the server, the vehicle state information comprising one or more of: positional information of a vehicle, battery information of a vehicle, and road condition information.

11. A server, comprising processing circuitry configured to:
determine a motorcade for a to-be-charged vehicle, so that a plurality of vehicles comprising the to-be-charged vehicle travel to a charging apparatus in a form of a motorcade, wherein a head vehicle in the motorcade is a vehicle that obtains charging path planning information from the server; and
send motorcade pre-establishment information to the to-be-charged vehicle, wherein the motorcade pre-establishment information comprises information of the head vehicle.

12. The server according to claim 11, wherein the processing circuitry is further configured to:
receive charging request information from the to-be-charged vehicle.

13. The server according to claim 11, wherein the processing circuitry is further configured to:
determine a vehicle that is required to be charged as the to-be-charged vehicle according to battery information of each of the vehicles.

14. The server according to claim 11, wherein the processing circuitry is further configured to:
send motorcade pre-establishment information to the head vehicle, wherein the motorcade pre-establishment information comprises information of the to-be-charged vehicle.

15. The server according to claim 11, wherein the processing circuitry is further configured to:
receive, from the to-be-charged vehicle, motorcade pre-establishment response information representing whether the to-be-charged vehicle agrees to join in the motorcade to travel to the charging apparatus.

16. The server according to claim 14, wherein the processing circuitry is further configured to:
receive, from the head vehicle, motorcade pre-establishment response information representing whether the head vehicle agrees that the to-be-charged vehicle joins in the motorcade to travel to the charging apparatus.

17. The server according to claim 11, wherein the processing circuitry is further configured to:
determine the head vehicle according to distances between vehicles that obtain the charging path planning information from the server and the to-be-charged vehicle.

18. The server according to claim 11, wherein the processing circuitry is further configured to:
provide options comprising travelling to the charging apparatus in a form of a motorcade or travelling to the charging apparatus independently for the to-be-charged vehicle;
receive selection information from the to-be-charged vehicle; and
determine a motorcade for the to-be-charged vehicle, in a case where the to-be-charged vehicle selects to travel to the charging apparatus in the form of a motorcade.

19. The server according to claim 18, wherein the processing circuitry is further configured to:
determine the charging apparatus and charging path planning information of the charging apparatus for the to-be-charged vehicle, in a case where the to-be-charged vehicle selects to travel to the charging apparatus independently.

20. The server according to claim 11, wherein the processing circuitry is further configured to:
receive, from each of the vehicles, vehicle state information of the vehicle, wherein the vehicle state information comprises one or more of: positional information of the vehicle, battery information of the vehicle and road condition information.

21. An electronic device for a vehicle, comprising processing circuitry configured to:
send, to vehicles around the electronic device, charging request information that requests the vehicles around the electronic device to charge the electronic device;
determine a vehicle among vehicles that agree to charge the electronic device as a charging vehicle;
receive charging path planning information from the charging vehicle; and
travel to the charging vehicle according to the charging path planning information.

22. The electronic device according to claim 21, wherein the processing circuitry is further configured to:
receive charging response information, from a vehicle around the electronic device, indicating that the vehicle agrees to charge the electronic device, wherein the charging response information comprises battery information of the vehicle around the electronic device; and
determine a charging vehicle according to the battery information of the vehicle that agrees to charge the electronic device and required power of the electronic device.

23. The electronic device according to claim 21, wherein the charging path planning information comprises positional information of the charging vehicle.

24. The electronic device according to claim 21, wherein the processing circuitry is further configured to:
receive return strategy information from the charging vehicle.

25. The electronic device according to claim 21, wherein the processing circuitry is further configured to:
send the charging request information to the vehicles around the electronic device by broadcasting.

26. The electronic device according to any one of claims 21 to 25, wherein the processing circuitry is further configured to:
communicate with the charging vehicle in a short-range communication manner.

27. A wireless communication method performed by an electronic device for a vehicle, comprising:
receiving motorcade pre-establishment information from a server, wherein the motorcade pre-establishment information representing a plurality of vehicles comprising the electronic device travel to a charging apparatus in a form of a motorcade, and the motorcade pre-establishment information comprises information on a head vehicle in the motorcade;
receiving charging path planning information from the head vehicle; and
joining in the motorcade according to the charging path planning information, to travel to the charging apparatus.

28. The wireless communication method according to claim 27, further comprising:
sending charging request information to the server.

29. The wireless communication method according to claim 27, further comprising:
sending, to the server, motorcade pre-establishment response information representing whether the electronic device agrees to join in the motorcade to travel to the charging apparatus in response to the motorcade pre-establishment information.

30. The wireless communication method according to claim 27, further comprising:
sending battery information of the electronic device to the head vehicle.

31. The wireless communication method according to claim 27, wherein the charging path planning information comprises positional information of the head vehicle and positional information of the charging apparatus.

32. The wireless communication method according to claim 31, wherein the charging path planning information further comprises road condition information on a charging path.

33. The wireless communication method according to any one of claims 27 to 32, wherein the electronic device communicates with the head vehicle in a short-range communication manner.

34. The wireless communication method according to claim 27, further comprising:
selecting to travel to the charging apparatus in the form of a motorcade or to travel to the charging apparatus independently; and
sending to the server selection information representing the selection; and
receiving the motorcade pre-establishment information from the server, in a case where it is selected to travel to the charging apparatus in the form of a motorcade.

35. The wireless communication method according to claim 34, further comprising:
receiving, from the server, charging path planning information for travelling to the charging apparatus, in a case where it is selected to travel to the charging apparatus independently; and
travelling to the charging apparatus independently according to the charging path planning information.

36. The wireless communication method according to claim 27, further comprising:
sending vehicle state information of the electronic device to the server, wherein the vehicle state information comprises one or more of: positional information of a vehicle, battery information of a vehicle, and road condition information.

37. A wireless communication method performed by a server, comprising:
determining a motorcade for a to-be-charged vehicle, so that a plurality of vehicles comprising the to-be-charged vehicle travel to a charging apparatus in a form of a motorcade, wherein a head vehicle in the motorcade is a vehicle that obtains charging path planning information from the server; and
sending motorcade pre-establishment information to the to-be-charged vehicle, wherein the motorcade pre-establishment information comprises information of the head vehicle.

38. The wireless communication method according to claim 37, further comprising:
receiving charging request information from the to-be-charged vehicle.

39. The wireless communication method according to claim 37, further comprising:
determining a vehicle that is required to be charged as the to-be-charged vehicle according to battery information of each of the vehicles.

40. The wireless communication method according to claim 37, further comprising:
sending motorcade pre-establishment information to the head vehicle, wherein the motorcade pre-establishment information comprises information of the to-be-charged vehicle.

41. The wireless communication method according to claim 37, further comprising:
receiving, from the to-be-charged vehicle, motorcade pre-establishment response information representing whether the to-be-charged vehicle agrees to join in the motorcade to travel to the charging apparatus.

42. The wireless communication method according to claim 40, further comprising:
receiving, from the head vehicle, motorcade pre-establishment response information representing whether the head vehicle agrees that the to-be-charged vehicle joins in the motorcade to travel to the charging apparatus.

43. The wireless communication method according to claim 37, further comprising:
determining the head vehicle according to distances between vehicles that obtain the charging path planning information from the server and the to-be-charged vehicle.

44. The wireless communication method according to claim 37, further comprising:
providing options comprising travelling to the charging apparatus in a form of a motorcade or travelling to the charging apparatus independently for the to-be-charged vehicle;
receiving selection information from the to-be-charged vehicle; and
determining a motorcade for the to-be-charged vehicle, in a case where the to-be-charged vehicle selects to travel to the charging apparatus in the form of a motorcade.

45. The wireless communication method according to claim 44, further comprising:
determining the charging apparatus and charging path planning information of the charging apparatus for the to-be-charged vehicle, in a case where the to-be-charged vehicle selects to travel to the charging apparatus independently.

46. The wireless communication method according to claim 37, further comprising:
receiving, from each of the vehicles, vehicle state information of the vehicle, wherein the vehicle state information comprises one or more of: positional information of the vehicle, battery information of the vehicle and road condition information.

47. A wireless communication method performed by an electronic device for a vehicle, comprising:
sending, to vehicles around the electronic device, charging request information that requests the vehicles around the electronic device to charge the electronic device;
determining a vehicle among vehicles that agree to charge the electronic device as a charging vehicle;
receiving charging path planning information from the charging vehicle; and
travelling to the charging vehicle according to the charging path planning information.

48. The wireless communication method according to claim 47, further comprising:
receiving charging response information, from a vehicle around the electronic device, indicating that the vehicle agrees to charge the electronic device, wherein the charging response information comprises battery information of the vehicle around the electronic device; and
determining a charging vehicle according to the battery information of the vehicle that agrees to charge the electronic device and required power of the electronic device.

49. The wireless communication method according to claim 47, wherein the charging path planning information comprises positional information of the charging vehicle.

50. The wireless communication method according to claim 47, further comprising:
receiving return strategy information from the charging vehicle.

51. The wireless communication method according to claim 47, further comprising:
sending the charging request information to the vehicles around the electronic device by broadcasting.

52. The wireless communication method according to any one of claims 47 to 51, further comprising:
communicating with the charging vehicle in a short-range communication manner.

53. A computer-readable storage medium comprising executable computer instructions that, when executed by a computer, cause the computer to perform the wireless communication method according to any one of claims 27 to 52.
